# EUROPÄISCHE PATENTANMELDUNG

(11) **EP 1 065 865 A1**
(43) Veröffentlichungstag der Anmeldung: **03.01.2001**
(21) Anmeldenummer: 99112372.0
(22) Anmeldetag: 28.06.1999
(51) Int. Cl.: H04M 1/57

(54) **Verfahren zur Realisierung einer frei programmierbaren Anrufer-Identifikation in einem Telekommunikations-Netzwerk sowie dazugehöriges Telekommunikations-Endgerät**

(71) Anmelder: SIEMENS AKTIENGESELLSCHAFT, 80333 München (DE)
(72) Erfinder: Vogl, Thomas, 82538 Geretsried (DE)

(57) **Zusammenfassung**

Die Erfindung bezieht sich auf ein Verfahren zur Realisierung einer frei programmierbaren Anrufer-Identifikation in einem Telekommunikations-Netzwerk (1) sowie ein dazugehöriges Telekommunikations-Endgerät (X), bei dem eine Anrufer-Identifikation (AI) von einer Aufnahmeeinheit (AE) aufgenommen, über ein Telekommunikations-Netzwerk (1) transparent übertragen, und von einer Wiedergabeeinheit (WE) an Stelle eines herkömmlichen Ruftonsignals ausgegeben wird.

## Beschreibung

Die Erfindung bezieht sich auf ein Verfahren zur Realisierung einer frei programmierbaren Anrufer-Identifikation in einem Telekommunikations-Netzwerk sowie ein dazugehöriges Telekommunikations-Endgerät und insbesondere auf eine Anrufer-Identifikation mittels im Netzwerk übertragener Audio/Videodaten.

Zum Anzeigen eines eingehenden Rufs wird in herkömmlichen Telekommunikations-Endgeräten ein Ruftonsignal erzeugt, das im einfachsten Signal aus einem Klingelzeichen besteht. Aus der Druckschrift DE 19 526 220 ist beispielsweise eine Rufeinrichtung bekannt, bei der in einer Speichereinheit eine Vielzahl von frei programmierbaren Ruftonsignalen abgespeichert werden können, wodurch beispielsweise vom Netz übertragene Rufnummern einem jeweiligen Ruftonsignal zugeordnet werden können und somit eine eindeutige Anrufer-Identifikation ermöglichen. Die Aufnahme des Ruftonsignals sowie die Zuordnung einer vom Netz gelieferten Rufnummer zum jeweiligen Ruftonsignal erfolgt hierbei lokal im angerufenen Telekommunikations-Endgerät.

Ferner ist aus der Druckschrift EP 0 766 435 ein Telekommunikations-Endgerät mit dem Leistungsmerkmal "Anrufer-Identifikation" bekannt, bei dem eine vom Netz zur Verfügung gestellte Anrufer-Identifikation derart ausgewertet wird, daß die vom Netz übertragenen Daten zur Weiterverarbeitung beispielsweise in einem Computersystem verwendet werden.

Demgegenüber liegt der vorliegenden Erfindung die Aufgabe zugrunde, ein Verfahren zur Realisierung einer frei programmierbaren Anrufer-Identifikation sowie ein dazugehöriges Telekommunikations-Endgerät zu schaffen, bei dem ein rufender Teilnehmer seine persönliche Anrufer-Identifikation individuell und dezentral erstellen kann.

Erfindungsgemäß wird diese Aufgabe hinsichtlich des Verfahrens durch die Maßnahmen des Patentanspruchs 7 und hinsichtlich des Endgeräts durch die Merkmale des Patentanspruchs 1 gelöst.

Insbesondere durch ein Aufnehmen einer Anrufer-Identifikation am jeweiligen Telekommunikations-Endgerät, ein anschließendes Übertragen dieser aufgenommenen Anrufer-Identifikation über ein Telekommunikations-Netzwerk und ein Wiedergeben der übertragenen Anrufer-Identifikation bei einem gerufenen Telekommunikations-Endgerät während einer Signalisierungsphase, kann jeder einzelne Teilnehmer individuell und dezentral seine eigene Anrufer-Identifikationen erzeugen und anschließend über das Netz übertragen. Die derart übertragene Anrufer-Identifikation wird hierbei an Stelle eines herkömmlichen Ruftonsignals zum Anzeigen des eingehenden Rufs ausgegeben.

Vorzugsweise besteht die Anrufer-Identifikation aus Audio-/Videodaten, die über ein eingebautes Mikrofon oder eine Kamera beim rufenden Teilnehmer aufgenommen und über einen entsprechenden Lautsprecher oder eine Anzeigeeinheit beim gerufenen Teilnehmer ausgegeben werden können.

Empfängerseitig besitzt das Telekommunikations-Endgerät vorzugsweise eine hierarchisch strukturierte Wiedergabeeinheit, die mit höchster Priorität die übertragene Anrufer-Identifikation als Ruftonsignal ausgibt und bei fehlender Übertragung einer derartigen aufgenommenen Anrufer-Identifikation eine lokal abgelegte Anrufer-Identifikation oder ein herkömmliches Signal als Ruftonsignal ausgibt.

Zur Übertragung der individuell aufgenommenen Anrufer-Identifikation werden vorzugsweise Signalisierungsnachrichtentypen verwendet, die eine transparente Datenübertragung erlauben.

In den Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:
- Figur 1: eine schematische Blockdarstellung der wesentlichen Elemente eines erfindungsgemäßen Telekommunikations-Endgeräts;
- Figur 2: eine schematische Darstellung einer Netzwerkumgebung mit erfindungsgemäßen Telekommunikations-Endgeräten gemäß einem ersten Ausführungsbeispiel; und
- Figur 3: eine schematische Darstellung einer Netzwerkumgebung mit erfindungsgemäßen Telekommunikations-Endgeräten gemäß einem zweiten Ausführungsbeispiel.

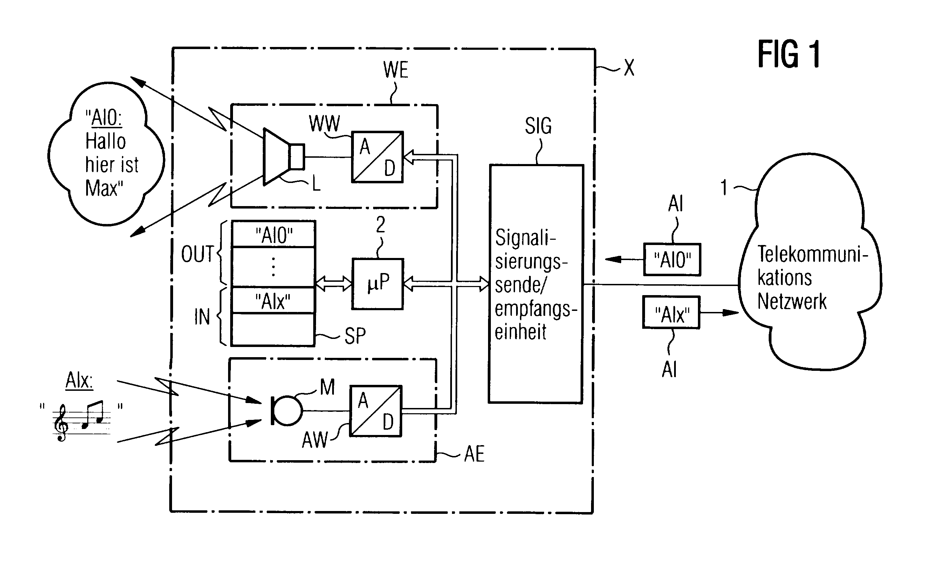

Figur 1 zeigt eine schematische Darstellung der wesentlichen Funktionsblöcke eines erfindungsgemäßen Telekommunikations-Endgeräts X, das mit einem Telekommunikations-Netzwerk 1 in Verbindung steht. Beim Telekommunikations-Netzwerk 1 handelt es sich beispielsweise um ein bidirektionales Kommunikationsnetzwerk, welches leitungsvermittelte oder paketvermittelte Daten überträgt. Vorzugsweise handelt es sich bei dem Telekommunikations-Netzwerk 1 um ein öffentliches oder privates Vermittlungssystem, es können jedoch in gleicher Weise das INTERNET oder kundenspezifische Intranets verwendet werden.

Das Telekommunikations-Endgerät X besteht im wesentlichen aus einer Wiedergabeeinheit WE, einer Aufnahmeeinheit AE, einer Speichereinheit SP und einer Signalisierungs-Sende/Empfangseinheit SIG. Die Steuerung dieser Funktionsblöcke wird von einer Steuereinheit 2 realisiert, die vorzugsweise aus einem Mikroprozessor oder einem Mikrocontroller besteht. Darüber hinaus besitzt das Telekommunikations-Endgerät X eine nicht dargestellt Datensende-/Empfangseinheit, die die eigentlichen Nutzdaten über das Telekommunikations-Netzwerk 1 überträgt. Auf eine weitere Beschreibung dieser bekannten Datensende/Empfangseinheit wird nachfolgend verzichtet, da sich die vorliegende Erfindung im wesentlichen auf eine Signalisierungsphase, d.h. den Verbindungsaufbau, in einem Telekommunikations-Netzwerk beschränkt.

In einem Telekommunikationssystem wird während einer Signalisierungsphase eine Verbindung zwischen zwei Telekommunikations-Endgeräten hergestellt, wobei der Abschluß eines derartigen Verbindungsaufbaus bei einem gerufenen Telekommunikations-Endgerät mit einem Ruftonsignal angezeigt wird.

Gemäß Figur 1 wird ein derartiges Ruftonsignal über die Wiedergabeeinheit WE akustisch angezeigt, wobei die Wiedergabeeinheit WE einen Lautsprecher L und einen Wiedergabewandler WW als D/A-Wandler aufweist. Die Wiedergabeeinheit WE kann jedoch auch eine optische und/oder akustische Wiedergabeeinheit oder ein sonstiges Wiedergabesystem darstellen. In ähnlicher Weise besteht die Aufnahmeeinheit AE aus einem Mikrofon M und einem Aufnahmewandler AW als A/D-Wandler. Die Aufnahmeeinheit AE kann ebenso ein akustisches und/oder optisches oder ein sonstiges Aufnahmesystem aufweisen.

Gemäß Figur 1 wird beispielsweise eine Melodie als Anrufer-Identifikation AIx über das Mikrofon M aufgenommen und vom Aufnahmewandler AW in ein digitalisiertes Audiosignal umgewandelt. Dieses digitalisierte Audiosignal wird anschließend in der Speichereinheit SP in einem Eingabebereich IN abgelegt. Auf diese Weise kann jeder Teilnehmer beispielsweise seine individuelle Signalisierungsmelodie aufnehmen und abspeichern, mit der er bei einem anderen Teilnehmer im Telekommunikations-Netzwerk 1 angezeigt werden möchte. Erfolgt nunmehr ein Verbindungsaufbau zu einem weiteren Telekommunikations-Endgerät im Telekommunikations-Netzwerk 1, so wird in der Signalisierungsphase die über die Aufnahmeeinheit AE aufgenommene und in der Speichereinheit SP abgelegte Anrufer-Identifikation AIx von der Signalisierungs-Sende/Empfangseinheit SIG über das Telekommunikations-Netzwerk 1 übertragen. Ein nicht dargestelltes gerufenes Telekommunikations-Endgerät empfängt hierbei die während der Signalisierungsphase übertragene Anrufer-Identifikation AIx vom Teilnehmerendgerät X und gibt ihrerseits die entsprechende Audiosequenz (Melodie) für die Anrufer-Identifikation AIx als Ruftonsignal aus.

In gleicher Weise kann ein nicht dargestelltes weiteres Teilnehmerendgerät während der Signalisierungsphase eine Anrufer-Identifikation AI0 über das Telekommunikations-Netzwerk 1 an das Telekommunikations-Endgerät X übertragen. Die Signalisierungs-Sende/Empfangseinheit SIG hierbei die übertragene Anrufer-Identifikation und speichert sie beispielsweise in der Speichereinheit SP in einen Ausgabebereich OUT ab. Ist die Signalisierungsphase abgeschlossen und somit der Verbindungsaufbau zwischen den beiden Teilnehmerendgeräten abgeschlossen, so werden die entsprechenden Daten (z.B. Audio/Videodaten) des Anrufer-Identifikationspakets AI0 von der Steuereinheit 2 ausgelesen und an die Wiedergabeeinheit WE weitergeleitet. Der Wiedergabewandler WW wandelt hierbei die digitalen Signale in analoge Signale um, die anschließend über den Lautsprecher L ausgegeben werden. Gemäß Figur 1 besteht das Anrufer-Identifikationspaket AI0 aus den am nicht dargestellten Telekommunikations-Endgerät aufgenommenen Audiodaten "Hallo, hier ist Max!".

Erfindungsgemäß kann somit eine Anrufer-Identifikation bei einem Telekommunikations-Endgerät frei programmiert bzw. individuell aufgenommen und anschließend während einer Signalisierungsphase übertragen werden. Mit Abschluß der Signalisierungsphase und vollständiger Übertragung der Anrufer-Identifikation kann diese an Stelle eines herkömmlichen Ruftonsignals an der Wiedergabeeinheit ausgegeben, so daß bereits mit der Signalisierung ohne Entstehen von Telefonkosten eine Übertragung von Informationen erfolgt oder beispielsweise ein eventueller Notfall angezeigt werden kann.

Gemäß Figur 1 wird die übertragene Anrufer-Identifikation AI0 an Stelle eines herkömmlichen Ruftonsignals ausgegeben. Darüber hinaus besteht die Möglichkeit einer hierarchischen Ausgabe von in der Speichereinheit SP abgespeicherten Ruftonsignalen. Vorzugsweise wird hierbei mit höchster Priorität die von einem Telekommunikations-Endgerät übertragene Anrufer-Identifikation AI über die Wiedergabeeinheit WE ausgegeben. Erfolgt jedoch keine Übertragung einer derartigen individuell aufgenommenen Anrufer-Identifikation über das Telekommunikations-Netzwerk 1, so kann alternativ eine Ruftonsignal wiedergegeben werden, das im Telekommunikations-Endgerät X lokal abgespeichert bzw. aufgenommen wurde. In diesem Fall kann eine herkömmliche Zuordnung einer vom Netzwerk übertragenen Anrufer-Identifikation zu dem lokal abgelegten Ruftonsignal erfolgen. Falls weder eine übertragene Anrufer-Identifikation noch ein lokal abgelegtes Ruftonsignal im Telekommunikations-Endgerät X vorhanden ist, so wird von der Wiedergabeeinheit WE ein herkömmliches Ruftonsignal (Klingelzeichen) ausgegeben.

In gleicher Weise ist auch eine zeitliche Hierarchisierung möglich, wobei bespielsweise zunächst die übertragene Anrufer-Identifikation wiedergegeben wird und nach einer vorbestimmten Zeit auf eine Wiedergabe eines lokal abgelegten oder herkömmlichen Ruftonsignals umgeschaltet wird.

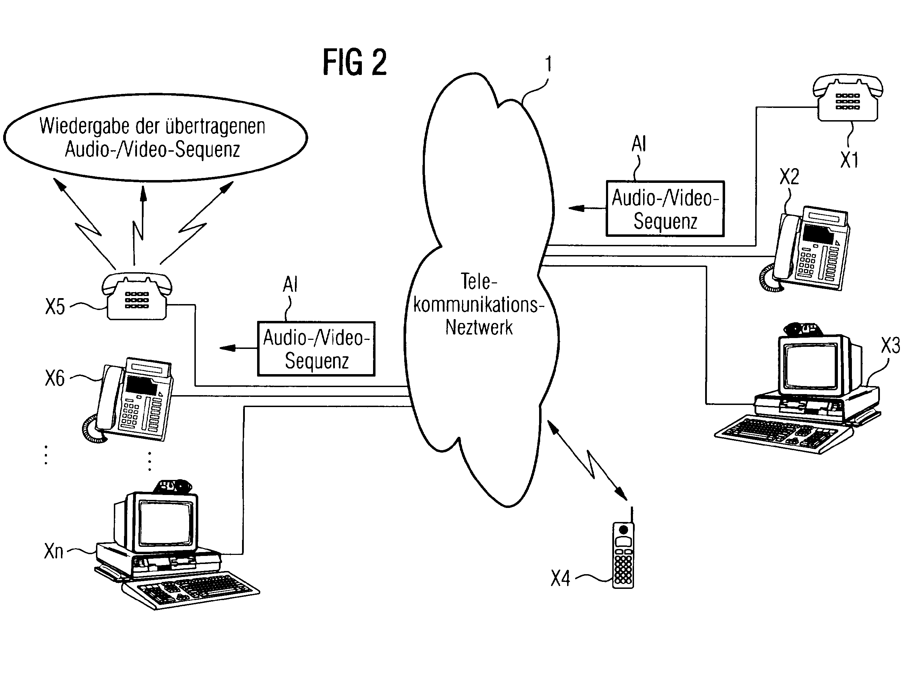

Figur 2 zeigt eine schematische Ansicht eines Telekommunikations-Netzwerkes mit einer Vielzahl von erfindungsgemäßen Telekommunikations-Endgeräten, wobei unterschiedliche Endgeräte-Typen verwendet werden. Gemäß Figur 2 ist an das Telekommunikations-Netzwerk 1 beispielsweise ein herkömmliches analoges oder digitales Teilnehmerendgerät X1 bzw. X5 angeschaltet. Die Bezugszeichen X2 und X6 bezeichnen sogenannte Komfort-Telefone, die eine Vielzahl von Funktionen haben. Mit den Bezugszeichen X3 und Xn sind computergestütztes Multimediageräte dargestellt, die als Telekommunikations-Endgeräte sowohl Sprache als auch Bilder übertragen können. Ferner kann als Telekommunikations-Endgerät ein Schnurlostelefon bzw. ein sogenanntes Handy X4 verwendet werden.

Beim Aufbau einer Verbindung zwischen dem Telekommunikations-Endgerät X1 und dem Telekommunikations-Endgerät X5 wird in gleicher Weise wie bei Figur 1 beispielsweise eine Audio-/Videosequenz als Anrufer-Identifikation AI über das Telekommunikations-Netzwerk 1 übertragen und zur Signalisierung an das Telekommunikations-Endgerät X5 weitergeleitet. Sobald der Verbindungsaufbau abgeschlossen ist, wird die vom Telekommunikations-Netzwerk 1 übertragene Audio-/Videosequenz AI am Endgerät X5 ausgegeben, wodurch eine individuelle Anrufer-Identifikation unmittelbar vom rufenden Telekommunikations-Endgerät X1 ermöglicht wird.

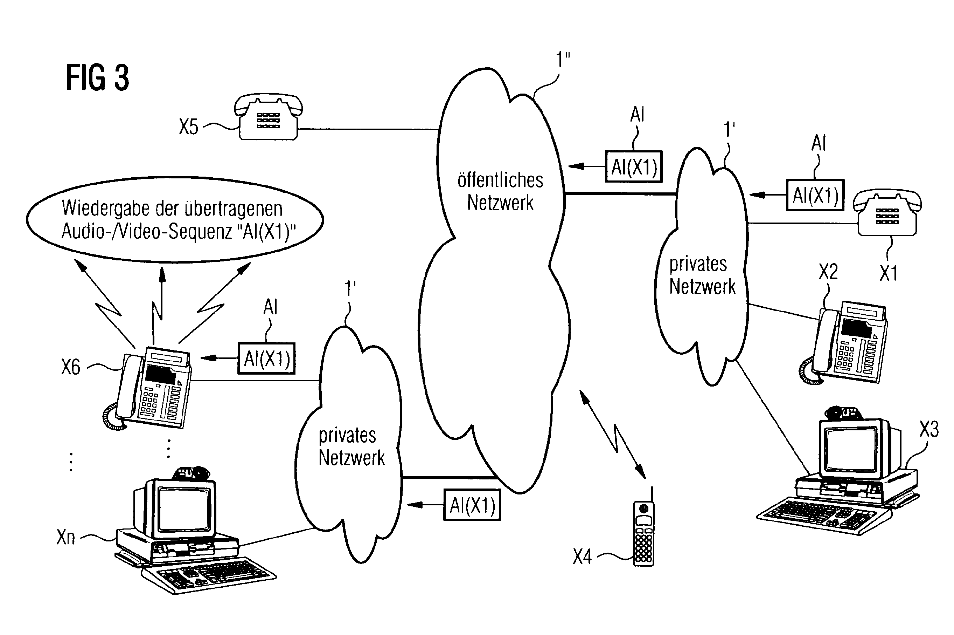

Figur 3 zeigt eine weitere schematische Darstellung eines Telekommunikationssystems mit einer Vielzahl von Telekommunikations-Endgeräten, wobei das Telekommunikations-Netzwerk aus einem öffentlichen Netzwerk 1" und zwei privaten Netzwerken 1' besteht. Eine Anrufer-Identifikation AI(X1) wird hierbei in gleicher Weise wie in den Figuren 1 und 2 von einem Telekommunikations-Endgerät X1 während einer Signalisierungsphase zunächst über das private Netzwerk 1' und anschließend über das öffentliche Netzwerk 1" sowie ein weiteres privates Netzwerk 1' zum Telekommunikations-Endgerät X6 übertragen. Vorzugsweise besteht die übertragene und vom Telekommunikations-Endgerät X1 aufgenommene Anrufer-Identifikation AI(X1) aus einer Audio-/Videosequenz, die am Telekommunikations-Endgerät X6 an Stelle eines herkömmlichen Ruftonsignals ausgegeben wird.

An Stelle von öffentlichen und privaten Netzwerken 1" bzw. 1` können auch das INTERNET oder ein sonstiges paketvermittelndes bidirektionales Telekommunikations-Netzwerk verwendet werden.

Vorzugsweise wird für das Telekommunikations-Netzwerk 1 ein Signalisierungsnetz unter Verwendung einer D-Kanal-Signalisierung der Schicht 3 des Euro-ISDN-Protokolls DSS1 verwendet. Ein derartiges Signalisierungsprotokoll wird beispielsweise im digitalen Signalisierungsnetz CCS7 verwendet.

Zum Aufbau einer Verbindung verwendet dieses Euro-DSS1-Signalisierungsprotokoll eine Vielzahl von Nachrichtentypen (message types), die eine transparente Übertragung von Daten ermöglichen. Derartige im Euro-DSSl-Signalisierungsprotokoll verwendete Nachrichtentypen (message types) sind beispielsweise:

| | |
|---|---|
| SETUP | "Einleiten eines Verbindungsaufbaus" |
| RELEASE | "Auflösung einer Verbindung" |
| RELEASE_COMPLETE | "Auflösung wird bestätigt" |
| CONNECT | "Annahme" |
| DISCONNECT | "Aufforderung zur Verbindungsauflösung" und |
| ALERT | "Anzeige eines ankommenden Anrufes". |

In diesen Nachrichtentypen (message types) können im Euro-DSSl-Signalisierungsprotokoll eine Vielzahl von Informationselementen (information elements) übertragen, die eine transparente Übertragung der vorstehend beschriebenen Anrufer-Identifikation ermöglichen. Derartige Informationselemente sind insbesondere:

| | |
|---|---|
| UUS (user user) | "Teilnehmer-zu-Teilnehmer-Information" |
| SUB (called subaddress) | "gerufene untergeordnete Adressierung" und |
| LLC (low layer compatibility) | "....". |

Eine Übermittlung der vorstehend beschriebenen Anrufer-Identifikation ist jedoch nicht nur in einem digitalen Netzwerk, sondern auch im analogen Telekommunikationsnetz möglich, sofern in einer Signalisierungsphase Daten transparent, d.h. ohne Prüfung durch Vermittlungsstellen oder das Netzwerk, als Anrufer-Identifikation übertragen werden.

Die vorliegende Erfindung wurde insbesondere anhand eines Euro-DSS1-Signalisierungsprotokolls beschrieben. Sie ist jedoch nicht darauf beschränkt und kann vielmehr auf alle weiteren Signalisierungsprotokolle in einem analogen oder digitalen Netzwerk angewendet werden, sofern bestimmte standardisierte Dienstmerkmale vorhanden sind und bestimmte Informationselemente in entsprechenden Nachrichtentypen vom Netzwerk transparent (d.h. ohne Prüfung) durchgereicht werden.

## Patentansprüche

1. Telekommunikations-Endgerät mit
einer Aufnahmeeinheit (AE) zum Aufnehmen von zumindest einer Anrufer-Identifikation (AI);
einer Wiedergabeeinheit (WE) zum Erzeugen von Ruftonsignalen; und
einer Signalisierungs-Sende/Empfangseinheit (SIG) zum Senden/Empfangen von Signalisierungsdaten,
**dadurch gekennzeichnet**, daß die Signalisierungs-Sende/Empfangseinheit (SIG) die zumindest eine aufgenommene Anrufer-Identifikation (AI) während einer Signalisierungsphase überträgt.

2. Telekommunikations-Endgerät nach Patentanspruch 1,
**dadurch gekennzeichnet**, daß die Wiedergabeeinheit (WE) die aufgenommene und übertragene Anrufer-Identifikation (AI) als Ruftonsignal wiedergibt.

3. Telekommunikations-Endgerät nach Patentanspruch 1 oder 2,
**dadurch gekennzeichnet**, daß die aufgenommene und übertragene Anrufer-Identifikation (AI) Audio-und/oder Videodaten aufweist.

4. Telekommunikations-Endgerät nach einem der Patentansprüche 1 bis 3,
**gekennzeichnet durch** eine Speichereinheit (SP) zum Speichern der zumindest einen aufgenommenen Anrufer-Identifikation (AI) .

5. Telekommunikations-Endgerät nach einem der Patentansprüche 2 bis 4,
**dadurch gekennzeichnet**, daß die Wiedergabeeinheit (WE) eine lokal abgelegte Anrufer-Identifikation (AI) als Ruftonsignal wiedergibt, wenn die Signalisierungs-Sende/Empfangseinheit (SIG) keine aufgenommene Anrufer-Identifikation (AI) empfängt.

6. Telekommunikations-Endgerät nach Patentanspruch 5,
**dadurch gekennzeichnet**, daß die lokal abgelegte Anrufer-Identifikation (AI) Audio-/Videodaten aufweist.

7. Verfahren zur Realisierung einer frei programmierbaren Anrufer-Identifikation in einem Telekommunikations-Netzwerk mit den Schritten:
a) Aufnehmen einer Anrufer-Identifikation (AI);
b) Senden der Anrufer-Identifikation (AI) während einer Signalisierungsphase;
c) Übertragen der gesendeten Anrufer-Identifikation (AI) über das Telekommunikations-Netzwerk (1);
d) Empfangen der übertragenen Anrufer-Identifikation (AI) während der Signalisierungsphase; und
e) Wiedergeben der empfangenen Anrufer-Identifikation (AI) als Ruftonsignal.

8. Verfahren nach Patentanspruch 7,
**dadurch gekennzeichnet**, daß das Aufnehmen in Schritt a) und Wiedergeben in Schritt e) ein Aufnehmen und Wiedergeben von Audio- und/oder Videodaten darstellt.

9. Verfahren nach Patentanspruch 7 oder 8,
**dadurch gekennzeichnet**, daß das Übertragen der Anrufer-Identifikation (AI) über das Telekommunikations-Netzwerk (1) transparent erfolgt.

10. Verfahren nach einem der Patentansprüche 7 bis 9,
**dadurch gekennzeichnet**, daß das Übertragen der Anrufer-Identifikation (AI) gemäß einem D-Kanal-Signalisierungsprotokoll der Schicht 3 in einem ISDN-Netz gemäß CCS7 erfolgt.

11. Verfahren nach einem der Patentansprüche 7 bis 10,
**dadurch gekennzeichnet**, daß das Übertragen der Anrufer-Identifikation (AI) in den Euro-ISDN-DSS1-Signalisierungs-Nachrichtentypen SETUP, RELEASE_COMPLETE, RELEASE, CONNECT, DISCONNECT und ALERT erfolgt.
